# EUROPÄISCHE PATENTSCHRIFT

(11) **EP 3 980 672 B1**
(45) Veröffentlichungstag und Bekanntmachung des Hinweises auf die Patenterteilung: **17.04.2024**
(21) Anmeldenummer: 20739843.9
(22) Anmeldetag: 04.06.2020
(51) Int. Cl.: F16H 25/24, F16D 55/226, F16D 65/18, F16H 25/20

(54) **ZENTRIERMECHANISMUS MIT EINEM BREMSKOLBEN EINER SCHEIBENBREMSE**
CENTERING MECHANISM WITH A BRAKE PISTON OF A DISK BRAKE
MÉCANISME DE CENTRAGE AVEC UN PISTON DE FREIN D'UN FREIN À DISQUE

(30) Priorität: 05.06.2019 DE 102019208230; 30.01.2020 DE 102020201142
(43) Veröffentlichungstag der Anmeldung: 13.04.2022
(73) Patentinhaber: Continental Automotive Technologies GmbH, 30165 Hannover (DE); SFS Group International AG, 9435 Heerbrugg (CH)
(72) Erfinder: WINKLER, Thomas, 60488 Frankfurt (DE); MILISIC, Lazar, 60488 Frankfurt (DE); HEß, Thomas, 60488 Frankfurt (DE); ZACH, Marijo, 9443 Widnau (CH)
(74) Vertreter: Körner, Volkmar Horst
(86) Internationale Anmeldenummer: PCT/DE2020/100471
(87) Internationale Veröffentlichungsnummer: WO 2020/244714

(56) Entgegenhaltungen:
- WO-A1-2019/158553
- US-A1- 2014 158 480

## Beschreibung

Die Erfindung betrifft einen Zentriermechanismus mit einem Bremskolben einer Scheibenbremse eines Kraftfahrzeuges, mit einer in eine Ausnehmung des Bremskolbens hineinragende Spindel, mit einer auf der Spindel aufgedrehten Mutter und mit einander gegenüberstehenden Abstützflächen der Mutter und des Bremskolbens, wobei bei einer vertikalen Anordnung mit dem Bremskolben unterhalb der Spindel und der Mutter ein Kräftegleichgewicht bei einer vollständig aus der vertikalen Lage herausbewegten Mutter-Spindel-Baugruppe vermieden ist. Bremskolben heutiger Scheibenbremsen werden in Stufenbohrungen von Bremssattelgehäusen montiert. Ein durchmessergroßer Abschnitt der Stufenbohrung nimmt den Bremskolben auf während ein durchmesserkleiner Abschnitt die Spindel aufnimmt. Die Spindel ist in dem durchmesserkleinen Abschnitt drehbar und axial unverschieblich gelagert. Der durchmessergroße Abschnitt ermöglicht eine axiale Verschiebbarkeit des Bremskolbens in dem Bremssattel. Die Mutter ist auf der Spindel aufgedreht und in einer Ausnehmung innerhalb des Kolbens angeordnet.

Bei aus der Praxis bekannten Bremskolben ist eine SpindelMutter-Baugruppe formschlüssig in dem Kolben zentriert. Dies führt zu einer aufwändigen Geometrie der Bauteile und zu einer aufwändigen Montage.

Aus der WO 2019158553 A1 ist ein selbstausrichtendes Gewindespindelmodul bekannt.

Aus der US 2014/158480 A1 ist eine Scheibenbremse eines Kraftfahrzeuges bekannt geworden, bei dem ein Kolben eine Ausnehmung hat. In die Ausnehmung dringt eine auf einer Spindel aufgedrehte Mutter ein. Die Mutter und der Kolben weisen einander gegenüberstehende Abstützflächen auf.

Der Erfindung liegt das Problem zugrunde, einen Zentriermechanismus der eingangs genannten Art zu schaffen, welcher eine besonders einfache Montage von Bremskolben und Mutter-Spindel-Baugruppe im Bremssattelgehäuse ermöglicht.

Dieses Problem wird erfindungsgemäß dadurch gelöst, dass bei der vertikalen Anordnung der Abstand des Schwerpunktes der vollständig aus der vertikalen Lage herausbewegten Mutter-Spindel-Baugruppe von einer Kontaktebene der Abstützflächen kleiner ist als die Hälfte des Durchmessers der Kontaktebene der Abstützflächen.

Durch diese Gestaltung lässt sich zunächst die Mutter auf die Spindel drehen und diese Mutter-Spindel-Baugruppe senkrecht in die Ausnehmung des Bremskolbens einführen. Da ein Kräftegleichgewicht bei einer geneigten Lage vermieden wird, gelangt die Mutter-Spindel-Baugruppe jederzeit selbständig in die vertikale Lage zurück. Die Vermeidung des Kräftegleichgewichts wird durch eine geeignete Geometrie der Bauteile erreicht. Damit werden Rückstellkräfte zur Rückstellung der Mutter-Spindel-Baugruppe in die vertikale Lage erzeugt. Dank der Erfindung lässt sich die Mutter-Spindel-Baugruppe in die Ausnehmung des Bremskolbens einführen und senkrecht mit der Spindel voran in die Stufenbohrung des Bremssattels einführen. Ein Verkanten der Bauteile durch ein Kippen der Mutter-Spindel-Baugruppe wird dank der Erfindung vermieden. Hierdurch gestaltet sich die Montage von Bremskolben und Mutter-Spindel-Baugruppe im Bremssattelgehäuse besonders einfach. Die Vermeidung eines Kräftegleichgewichts gestaltet sich konstruktiv besonders einfach, weil bei der vertikalen Anordnung der Abstand des Schwerpunktes der vollständig aus der vertikalen Lage herausbewegten Mutter-Spindel-Baugruppe von einer Kontaktebene der Abstützflächen kleiner ist als die Hälfte des Durchmessers der Kontaktebene der Abstützflächen. Durch diese Gestaltung ist die Mutter-Spindel-Baugruppe nach Art eines Stehaufmännchens gestaltet und hält die vertikale Lage selbständig. Die Richtung der Schwerkraft der Mutter-Spindel-Baugruppe verläuft damit immer innerhalb der Kontaktebene. Die Bewegung der Bauteile in die vorgesehene Lage gestaltet sich gemäß einer anderen vorteilhaften Weiterbildung der Erfindung besonders einfach, wenn eine der Abstützflächen konisch mit einem Konuswinkel von zumindest 90°ist.

Zur Verringerung der Reibung bei der aus der vertikalen Lage herausbewegten Mutter-Spindel-Baugruppe trägt es gemäß einer anderen vorteilhaften Weiterbildung der Erfindung bei, wenn eine der konischen Abstützflächen gegenüberstehende Abstützfläche ballig zur Erzeugung einer umlaufenden linearen Kontaktfläche gestaltet ist. Hierdurch besitzen die Abstützflächen nur eine Linienauflage, so dass eine Reibung zwischen Mutter und Bremskolben besonders gering gehalten ist.

Bei Bremssätteln von Scheibenbremsen gestaltet sich gemäß einer anderen vorteilhaften Weiterbildung der Erfindung die Geometrie der Bauteile zur Vermeidung des Kräftegleichgewichts besonders einfach, wenn der Durchmesser der Kontaktebene der Abstützflächen größer als 15mm ist. Vorzugsweise beträgt das radiale Spiel der Mutter in der Ausnehmung des Bremskolbens weniger als 1mm.

Die Auslenkung der Mutter-Spindel-Baugruppe aus der vertikalen Lage lässt sich gemäß einer anderen vorteilhaften Weiterbildung der Erfindung einfach begrenzen, wenn ein der Abstützfläche abgewandter äußerer Rand der Mutter in der vollständig aus der vertikalen Lage herausbewegten Mutter-Spindel-Baugruppe an der Innenseite des Bremskolbens anliegt. Vorzugsweise wird der Innendurchmesser der Ausnehmung im Bremskolben besonders gering gehalten, was ebenfalls zu einer geringen Auslenkung der Mutter-Spindel-Baugruppe beiträgt.

Ein niedriger Schwerpunkt der Mutter und damit der Mutter-Spindel-Baugruppe lässt sich gemäß einer anderen vorteilhaften Weiterbildung der Erfindung einfach sicherstellen, wenn der äußere Durchmesser der Mutter zumindest so groß ist, wie der Abstand des von der Abstützfläche abgewandten äußeren Randes der Mutter von der Abstützfläche. Durch diese Gestaltung lässt sich der äußere Durchmesser der Mutter besonders groß wählen, um Rückstellkräfte zur Rückstellung der Mutter-Spindel-Baugruppe in die vertikale Lage zu unterstützen.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: eine Schnittdarstellung durch einen Bremssattel mit einem Bremskolben und einer Mutter-Spindel Baugruppe,
- Fig.2: der Bremskolben und die Mutter-Spindel-Baugruppe aus Figur 1 bei der Montage,
- Fig.3: den Bremskolben und die Mutter-Spindel-Baugruppe in einer vertikalen Lage,
- Fig.4: den Bremskolben und die Mutter-Spindel-Baugruppe in einer ausgelenkten Lage mit Kraftvektoren.

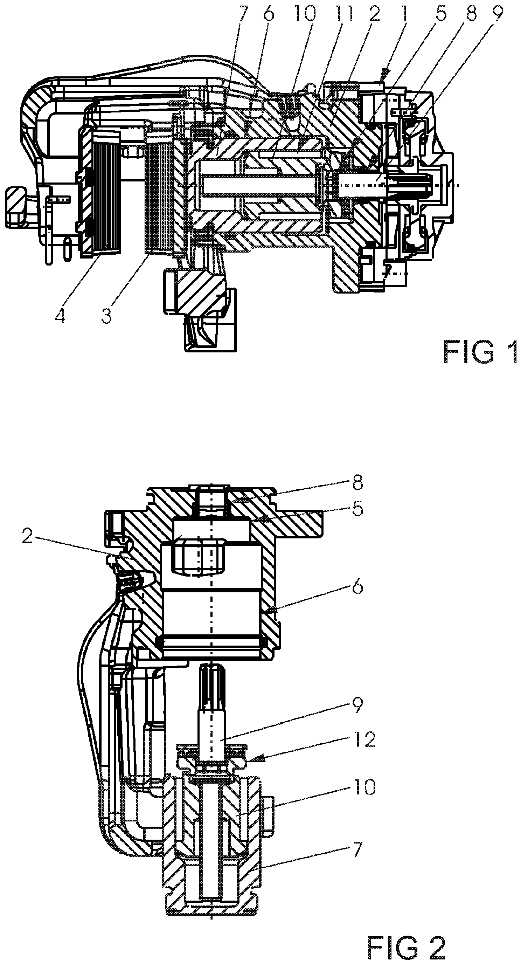

Figur 1 zeigt einen Bremssattel 1 einer Scheibenbremse eines Kraftfahrzeuges mit einem Bremssattelgehäuse 2 mit zwei einander gegenüberstehenden Bremsbelägen 3, 4. Eine zwischen den Bremsbelägen 3, 4 angeordnete Bremsscheibe der Scheibenbremse ist nicht dargestellt. In dem Bremssattelgehäuse 2 ist eine Stufenbohrung 5 angeordnet. In einem durchmessergroßen Abschnitt 6 der Stufenbohrung 5 ist ein Bremskolben 7 axial verschieblich angeordnet. Der Bremskolben 7 stützt eine der Bremsbeläge 3 ab. In einem durchmesserkleinen Abschnitt 8 der Stufenbohrung 5 ist eine Spindel 9 angeordnet. Auf der Spindel 9 ist eine Mutter 10 aufgedreht. Der Bremskolben 7 hat eine Ausnehmung 11 zur Aufnahme der Mutter 10 und eines Teilbereichs der Spindel 9.

Figur 2 zeigt das Bremssattelgehäuse 2 aus Figur 1 bei der Montage des Bremskolbens 7 mit der Mutter 10 und der Spindel 9. Das Bremssattelgehäuse 2 befindet sich in einer Lage, in der die Stufenbohrung 5 mit dem durchmessergroßen Abschnitt 6 nach unten hin offen ist. Der Bremskolben 7 wird zur Montage mit einer Mutter-Spindel-Baugruppe 12 vormontiert und von unten her in die Stufenbohrung 5 eingeführt. Hierbei ist es bedeutsam, dass sich die Spindel 9 und damit die Mutter-Spindel-Baugruppe 12 in der dargestellten vertikalen und zentrierten Lage zum Bremskolben 7 befindet.

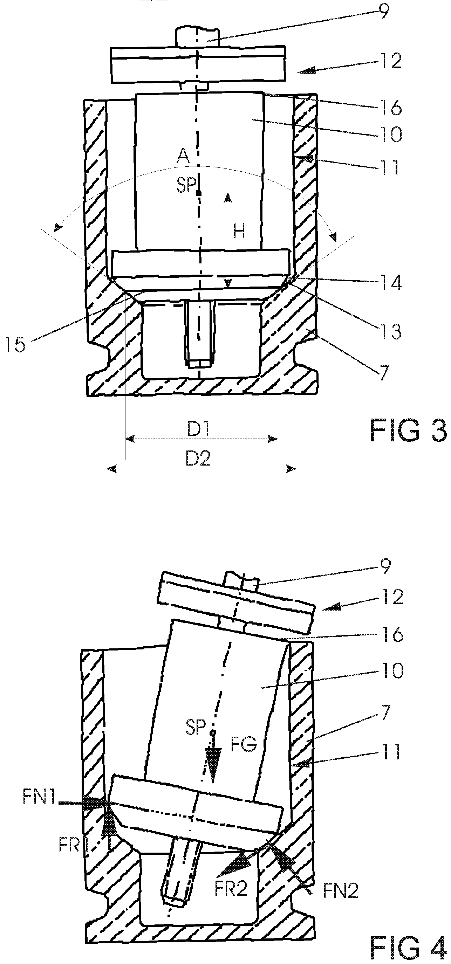

Figur 3 zeigt vergrößert eine Schnittdarstellung des Bremskolbens 7 in der vertikalen Lage der Mutter-Spindel-Baugruppe 12, in welcher die Bauteile in das Bremssattelgehäuse 2 eingeführt werden können. Die Mutter-Spindel-Baugruppe 12 ist zudem zentriert in der Ausnehmung 11 des Bremskolbens 7 angeordnet. Die Mutter 10 und der Bremskolben 7 weisen einander gegenüberstehende Abstützflächen 13, 14 auf. Die Abstützfläche 13 in der Ausnehmung 11 des Bremskolbens 7 ist konisch mit einem Konuswinkel A von zumindest 90° gestaltet. Die Abstützfläche 14 der Mutter 10 ist ballig gestaltet. Hierdurch entsteht eine um die Mutter 10 umlaufende lineare Kontaktfläche 15 mit einem Durchmesser D1. Der Abstand eines Schwerpunktes SP der Mutter-Spindel-Baugruppe 12 zur von der Kontaktfläche 15 gebildeten Kontaktebene ist kleiner als die Hälfte des Durchmessers D1 der Kontaktfläche 15. Damit verläuft der in Figur 4 dargestellte Kraftvektor FG der Schwerkraft immer innerhalb des von der Kontaktfläche 15 begrenzten Bereichs. Die Mutter 10 ist nahezu vollständig innerhalb der Ausnehmung 11 des Bremskolbens 7 angeordnet. Damit stößt ein der Kontaktfläche 15 abgewandter äußerer Rand 16 der Mutter 10 bei einem Kippen der Mutter-Spindel-Baugruppe 12 an der Innenseite des Bremskolbens 7 an. Dies begrenzt die mögliche Kippneigung der Mutter-Spindel-Baugruppe 12. Ein äußerer Durchmesser D2 der Mutter 10 ist mindestens so groß wie der Abstand des äußeren Randes 16 von der Kontaktfläche 14.

Figur 4 zeigt die aus der vertikalen Lage ausgelenkte Lage der Mutter-Spindel-Baugruppe mit Kraftvektoren. Die Kraftvektoren sind mit FN für eine Normalkraft, mit FR für eine Reibkraft und mit FG für eine Gewichtskraft gekennzeichnet. Hierbei ist zu erkennen, dass sich in der dargestellten, aus der vertikalen Lage herausbewegten Mutter-Spindel-Baugruppe 12 kein Kräftegleichgewicht einstellt. Vielmehr wird die Gewichtskraft FG eine Rückstellkraft erzeugen, die die Mutter-Spindel-Baugruppe 12 in die in Figur 3 dargestellte Lage zurückbewegt. Diese Rückstellkraft wird durch die Geometrien der Bauteile derart festgelegt, dass zudem dargestellte Reibungskräfte überwunden werden.

Im Vergleich zu der Stellung nach Figur 3 ist in Figur 4 der Schwerpunkt der Mutter-Spindel-Baugruppe 12 durch die Auslenkung angehoben. Die beschriebenen Geometrien der Bauteile sind jedoch so festgelegt, dass die Rückstellkraft ausreicht, um die in Figur 3 dargestellte Lage zu erreichen.

## Patentansprüche

1. Zentriermechanismus mit einem Bremskolben (7) einer Scheibenbremse eines Kraftfahrzeuges, mit einer in eine Ausnehmung (11) des Bremskolbens (7) hineinragende Spindel (9), mit einer auf der Spindel (9) aufgedrehten Mutter (10) und mit einander gegenüberstehenden Abstützflächen (13, 14) der Mutter (10) und des Bremskolbens (7), wobei bei einer vertikalen Anordnung mit dem Bremskolben (7) unterhalb der Spindel (9) und der Mutter (10) ein Kräftegleichgewicht bei einer vollständig aus der vertikalen Lage herausbewegten Mutter-Spindel-Baugruppe (12) vermieden ist, **dadurch gekennzeichnet, dass** bei der vertikalen Anordnung der Abstand des Schwerpunktes (SP) der vollständig aus der vertikalen Lage herausbewegten Mutter-Spindel-Baugruppe (12) von einer Kontaktebene der Abstützflächen (13, 14) kleiner ist als die Hälfte des Durchmessers (D1) der Kontaktebene der Abstützflächen (13, 14).

2. Zentriermechanismus nach Anspruch 1, **dadurch gekennzeichnet, dass** eine der Abstützflächen (13) konisch mit einem Konuswinkel (A) von zumindest 90°ist.

3. Zentriermechanismus nach zumindest einem der Ansprüche 1 bis 2, **dadurch gekennzeichnet, dass** eine der konischen Abstützflächen (13) gegenüberstehende Abstützfläche (14) ballig zur Erzeugung einer umlaufenden linearen Kontaktfläche (15) gestaltet ist.

4. Zentriermechanismus nach zumindest einem der Ansprüche 1 bis 3, **dadurch gekennzeichnet, dass** der Durchmesser (D1) der Kontaktebene der Abstützflächen (13, 14) größer als 15mm ist.

5. Zentriermechanismus nach zumindest einem der Ansprüche 1 bis 4, **dadurch gekennzeichnet, dass** ein der Abstützfläche (13) abgewandter äußerer Rand (16) der Mutter (10) in der vollständig aus der vertikalen Lage herausbewegten Mutter-Spindel-Baugruppe (12) an der Innenseite des Bremskolbens (7) anliegt.

6. Zentriermechanismus nach zumindest einem der Ansprüche 1 bis 5, **dadurch gekennzeichnet, dass** der äußere Durchmesser (D2) der Mutter (10) zumindest so groß ist, wie der Abstand des von der Abstützfläche (14) abgewandten äußeren Randes (16) der Mutter (10) von der Abstützfläche (14) .

## Claims

1. A centering mechanism with a brake piston (7) of a disk brake of a motor vehicle, with a spindle (9) protruding into a recess (11) of the brake piston (7), with a nut (10) screwed onto the spindle (9) and with opposing support surfaces (13, 14) of the nut (10) and of the brake piston (7), wherein in a vertical arrangement with the brake piston (7) below the spindle (9) and the nut (10), a force equilibrium is avoided when the nut-spindle assembly (12) is moved completely out of the vertical position, **characterized in that** in the vertical arrangement, the distance of the center of gravity (SP) of the nut-spindle assembly (12) completely moved out of the vertical position from a contact plane of the support surfaces (13, 14) is less than half the diameter (D1) of the contact plane of the support surfaces (13, 14).

2. The centering mechanism according to claim 1, **characterized in that** one of the support surfaces (13) is conical with a cone angle (A) of at least 90°.

3. The centering mechanism according to at least one of claims 1 to 2, **characterized in that** a support surface (14) opposite the conical support surfaces (13) is crowned to produce a circumferential linear contact surface (15).

4. The centering mechanism according to at one of claims 1 to 3, **characterized in that** diameter (D1) of the contact plane of the support surfaces (13, 14) is greater than 15 mm.

5. The centering mechanism according to at one of claims 1 to 4, **characterized in that** an outer edge (16) of the nut (10) facing away from the support surface (13) in the nut-spindle assembly (12) moved completely out of the vertical position abuts against the inner side of the brake piston (7).

6. The centering mechanism according to at one of claims 1 to 5, **characterized in that** the outer diameter (D2) of the nut (10) is at least as great as the distance of the outer edge (16) of the nut (10) facing away from the support surface (14) from the support surface (14).

## Revendications

1. Mécanisme de centrage avec un piston de freinage (7) d'un frein à disque d'un véhicule automobile, avec une broche (9) dépassant dans un évidement (11) du piston de freinage (7), avec un écrou (10) vissé sur la broche (9) et avec des surfaces d'appui (13, 14) opposées de l'écrou (10) et du piston de freinage (7), dans lequel, lors d'une disposition verticale avec le piston de freinage (7) en dessous de la broche (9) et de l'écrou (10), un équilibre des forces dans le cas d'un sous-ensemble écrou-broche (12) déplacé entièrement hors de la position verticale est évité, **caractérisé en ce que**, dans la disposition verticale, la distance entre le centre de gravité (SP) du sous-ensemble écrou-broche (12) déplacé entièrement hors de la position verticale et un plan de contact des surfaces d'appui (13, 14) est inférieure à la moitié du diamètre (D1) du plan de contact des surfaces d'appui (13, 14).

2. Mécanisme de centrage selon la revendication 1, **caractérisé en ce qu'**une des surfaces d'appui (13) est conique avec un angle de cône (A) d'au moins 90°.

3. Mécanisme de centrage selon au moins l'une des revendications 1 à 2, **caractérisé en ce qu'**une surface d'appui (14) opposée aux surfaces d'appui (13) coniques présente une forme bombée afin d'obtenir une surface de contact linéaire périphérique (15).

4. Mécanisme de centrage selon au moins l'une des revendications 1 à 3, **caractérisé en ce que** le diamètre (D1) du plan de contact des surfaces d'appui (13, 14) est supérieur à 15 mm.

5. Mécanisme de centrage selon au moins l'une des revendications 1 à 4, **caractérisé en ce qu'**un bord externe (16), opposé à la surface d'appui (13), de l'écrou (10) s'appuie, lorsque le sous-ensemble écrou-broche (12) est déplacé entièrement hors de la position verticale, contre la face interne du piston de freinage (7).

6. Mécanisme de centrage selon au moins l'une des revendications 1 à 5, **caractérisé en ce que** le diamètre extérieur (D2) de l'écrou (10) est au moins aussi grand que la distance entre le bord externe (16), opposé à la surface d'appui (14), de l'écrou (10) et la surface d'appui (14).
